# EUROPEAN PATENT SPECIFICATION

(11) **EP 4 488 752 B1**
(45) Date of publication and mention of the grant of the patent: **11.03.2026**
(21) Application number: 23183573.7
(22) Date of filing: 05.07.2023
(51) Int. Cl.: G03B 21/00, G03B 21/20

(54) **PROJECTION UNIT OF OR FOR A VEHICLE, VEHICLE PART AND VEHICLE COMPRISING SUCH A PROJECTION UNIT**
PROJEKTIONSEINHEIT FÜR EIN FAHRZEUG, FAHRZEUGTEIL UND FAHRZEUG MIT EINER DERARTIGEN PROJEKTIONSEINHEIT
UNITÉ DE PROJECTION DE OU POUR UN VÉHICULE, PIÈCE DE VÉHICULE ET VÉHICULE COMPRENANT UNE TELLE UNITÉ DE PROJECTION

(43) Date of publication of application: 08.01.2025
(73) Proprietor: HELLA Saturnus Slovenija d.o.o., 1000 Ljubljana (SI)
(72) Inventor: Wagner, Andrej, 1000 Ljubljana (SI); Krumpak, Matjaz, 1000 Ljubljana (SI); Virsek, Marko, 1290 Grosuplje (SI); Tekavcic, Andraz, 1000 Ljubljana (SI); Borut, Matko, 3331 Nazarje (SI)
(74) Representative: Behr-Wenning, Gregor

(56) References cited:
- JP-A- 2015 049 272
- KR-A- 20100 120 963
- US-A1- 2002 126 282
- US-A1- 2006 197 915
- US-A1- 2013 076 995
- US-B1- 6 486 997

## Description

The present invention relates to a projection unit of or for a vehicle. Further, the present invention is drawn to a vehicle part and/or a vehicle comprising such a projection unit.

### PRIOR ART

The projection of images onto a projection surface of a vehicle or near to a vehicle is becoming more and more popular in modern vehicles. Such images may be used as an inspirational feature for attracting customers. Inspirational features may be that a particular image is projected to a given projection surface when the vehicle is unlocked by the driver or owner. Such an image may be projected to the ground next to the vehicle.

However, such projections may also be used to transmit information to other traffic participants. As an example, warning messages indicating aquaplaning, ice or traffic congestions on a given road may be displayed to avoid accidents. Such warning messages may be displayed on the outer surface of the vehicle to be well visible to other traffic participants.

Such images are generated by a projection unit that often comprises a digital projector and that is typically integrated into a vehicle part or otherwise fastened to a given vehicle. Typical vehicle parts into which a projection unit may be integrated can be side mirrors, door sills or the like. In such vehicle parts, the available space is usually limited. The constructional space needed for the integration of conventional projection units is often bigger than the available space in the given vehicle part, preventing integration.

Digital projectors are disclosed in JP 2015/049272 A, in US 2002/0126282 A1, in KR 2010/0120963 A and US 6,486,997 B1. Only JP 2015/049272 A is explicitly directed to digital projectors used in automotive applications.

### DISCLOSURE OF THE INVENTION

It is one task of one embodiment of the present invention to present to propose a projection unit for projecting images to a projection surface of or next to a vehicle which needs less constructional space compared to known projection units.

Furthermore, an embodiment of the present invention has the object to provide a vehicle part and/or a vehicle comprising such a projection unit.

The task is solved by the features specified in claims 1, 10 or 11. Advantageous embodiments are the subject of the dependent claims.

One embodiment of the present invention is directed to a projection unit of or for a vehicle, comprising
- a light source,
- a reflective microdisplay for reflecting the light emitted by the light source, comprising
   ∘ micro-reflecting elements arranged in a matrix,
   ∘ the matrix being defined by at least two rows running along a row direction and at least two columns running along a column direction,
   ∘ the row direction and the column direction running perpendicular to each other,
- a first lens unit for collecting the light emitted by the light source along a first axis,
- a reflector for directing the light collected by the first lens unit to the reflective microdisplay along a second axis,
- a second lens unit for collecting the light reflected by the reflective microdisplay and for directing the collected light to a projection surface, wherein
- the reflective microdisplay is arranged inside the projection unit rotated by a rotation angle such that the row direction and/or the column direction are inclined to the first axis.

Within the following description rotations by 90° and integer multiple thereof are not considered as leading to inclinations.

The images to be projected on the projection surface of or near the vehicle should have a specific orientation with regard to the axes of the vehicle. For example, images projected on the surface below the side mirror of the vehicle should either be parallel or perpendicular to the longitudinal vehicle axis. For this purpose, projection units known from the prior art also need to be arranged parallel or perpendicular to the longitudinal vehicle axis. When to be integrated into a side mirror such an arrangement is almost impossible mainly for the following reasons: Side mirrors typically only provide limited available space. Further, side mirrors are typically curved parts which means that even if the available space allows for an integration of a projection unit, an arrangement perpendicular or parallel to the longitudinal vehicle axis is not possible. An inclined arrangement would lead to distortions of the projected image.

According to the present disclosure the reflective microdisplay is arranged inside the projection unit rotated by a rotation angle such that the first row direction and/or the second row direction are inclined to the first axis. The rotation of the reflective microdisplay enables a projection of the image in the desired orientation with reference to the longitudinal vehicle axis although the first axis along which the light emitted by the light source is collected neither runs parallel nor perpendicular to the longitudinal vehicle axis. The first axis typically determines the orientation of the entire projection unit. It is therefore possible to integrate the projection unit according to the present disclosure into a given vehicle part irrespective of the orientation needed with respect to the longitudinal vehicle axis. The reflective microdisplay is rotated accordingly such that the image projected on the surface of or near the vehicle has the desired orientation and is not distorted.

The light source may comprise as one or more LEDs and/or laser sources. Reflective microdisplays may comprise micro-LEDs, Organic Light Emitting Diodes (OLED) or Active Matrix OLEDs (AMOLED), to name a few.

According to another embodiment the reflector is arranged inside the projection unit rotated such that the light reflected by the reflector is completely impinging on the reflective microdisplay. In case the reflective microdisplay is rotated but the orientation of the other parts of the projection unit remains unchanged, parts of the light reflected by the reflector will not impinge on the reflective microdisplay, thereby reducing the light intensity. This may result in a deterioration of the quality of the correctly oriented image displayed on the projection surface. In extreme cases parts of the image may be cut. In this embodiment, however, the reflector is arranged inside the projection unit such that all light reflected by the reflector impinges on the reflective microdisplay. The quality of the projected image is thereby increased. The angle by which the reflector is rotated may be the same as the rotation angle of the reflective microdisplay. However, other arrangements are possible.

In a further embodiment the light source and/or the first lens unit are arranged inside the projection unit rotated such that the light impinging on the reflective microdisplay has an even light distribution. An even light distribution further enhances the quality of the projected image. The angle by which the reflector is rotated may be the same as the rotation angle of the reflective microdisplay.

In another embodiment the reflective microdisplay is embodied as a liquid-crystal-on-silicon-element. Such microdisplay elements are also abbreviated as LCoS. They are widely used in digital projectors and thus available in large amounts. Their reliability has been proven.

A further embodiment demands that the first lens unit comprises a pre-polarizer and the reflector is formed by a polarizing beam splitter. A certain peculiarity of LCoS is that the degree by which they reflect light depends on the angular orientation of the waves of the light having maxima e.g., each 180° and minima at 90° and 270°. The pre-polarizer only allows light to pass at a given polarization angle. Depending on the polarization angle, the polarizing beam splitter either reflects the light to the LCoS or allows it to penetrate. Areas of light directed to the LCoS lead to bright pixels at the projected image whereas areas of transmitted light lead to dark pixels, thereby creating at least monochromatic images.

According to another embodiment
- the pre-polarizer polarizes the light into a first polarizing plain and a second polarizing plain,
- the first polarizing plain and the second polarizing plain running perpendicular to each other,
- the pre-polarizer being arranged inside the projection unit rotated such that the first polarizing plain is running parallel or perpendicular to the row direction.

The term "pre-polarizer" refers to its arrangement relative to the polarizing beam splitter and/or the reflective microdisplay.

In this embodiment the pre-polarizer is inclined with a fixed relationship to the reflective microdisplay. Thereby, the polarized light impinges on the reflective microdisplay such that it is either minimally or maximally reflected. The quality of the image displayed on the projection surface is thereby improved.

A further embodiment requires that the second lens unit comprises a post-polarizer. The term "post-polarizer" refers to its arrangement relative to the polarizing beam splitter and/or the reflective microdisplay. The image leaving the polarizing beam splitter is again polarized, thereby further improving the quality of the image displayed on the projection surface.

According to another embodiment the reflective microdisplay is embodied as a digital micromirror device. In this case the reflective microdisplay is not embodied as an LCoS but a digital micromirror device (DMD), sometimes also referred as digital light processing (DLP). In contrast to LCoS, the light does not have to be polarized, a better light yield is reached. Moreover, the number of parts can be reduced as no polarizers are needed.

A further embodiment is characterized in that the reflector is formed by a prism. A prism enables the desired redirection of light to the digital micromirror device using one component only. The projection unit according to this embodiment can thus be compact.

Another aspect of the invention is directed towards a vehicle part comprising projection unit according to one of the preceding embodiments.

A further aspect of the invention relates to a vehicle comprising a vehicle part according to one of the embodiments previously presented and/or according to an embodiment of a projection unit discussed before.

The technical effects and advantages as discussed regarding the present projection unit at least to a large extent also apply to the vehicle part and the vehicle. Briefly, it is possible to arrange the projection unit in a way that it fits to the available space of the given vehicle part without compromising the desired orientation of the projected image with respect e.g., to the longitudinal vehicle axis.

### PREFERRED EMBODIMENTS

The present invention is described in detail with reference to the drawings attached wherein
- Figure 1A: shows a principle side view of a projection unit according to the prior art,
- Figure 1B: shows a principle top view of the projection unit shown in Figure 1B arranged inside a vehicle part,
- Figure 1C: shows a principle top view of a vehicle comprising a projection unit arranged inside a vehicle part along the lines with Figure 1B,
- Figure 2A: shows a principle top view of a first embodiment of a projection unit according to the present invention,
- Figure 2B: is a principle sketch showing details on the polarized light,
- Figure 2C: is a principle isometric view of the projection unit of Figure 2A,
- Figure 2D: shows a principle top view of a vehicle comprising a projection unit arranged inside a vehicle part along the lines with Figure 2C,
- Figure 3: a principle isometric view of a second embodiment of a projection unit according to the present invention, and
- Figure 4: a principle isometric view of a third embodiment of a projection unit according to the present invention.

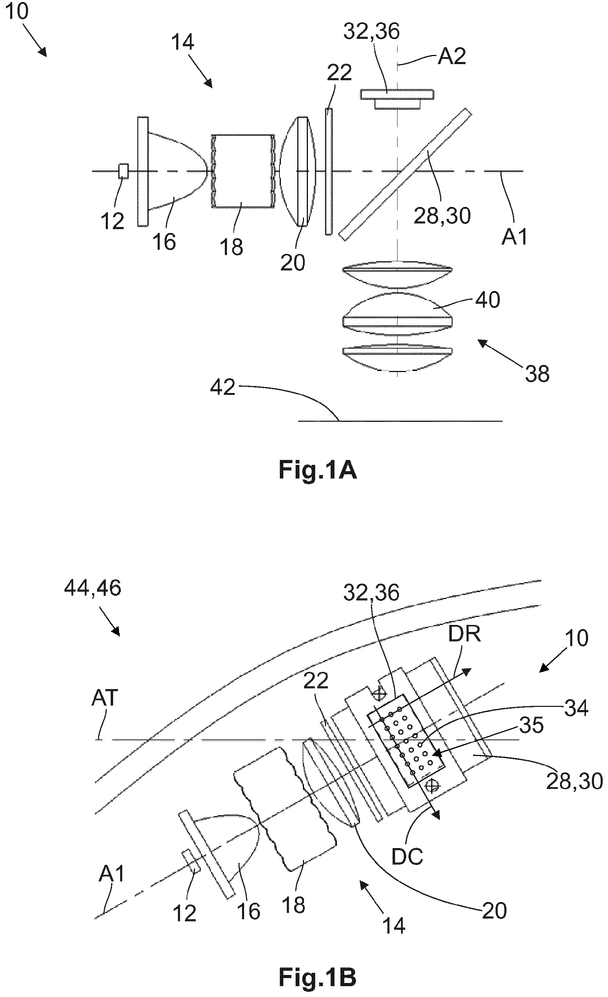

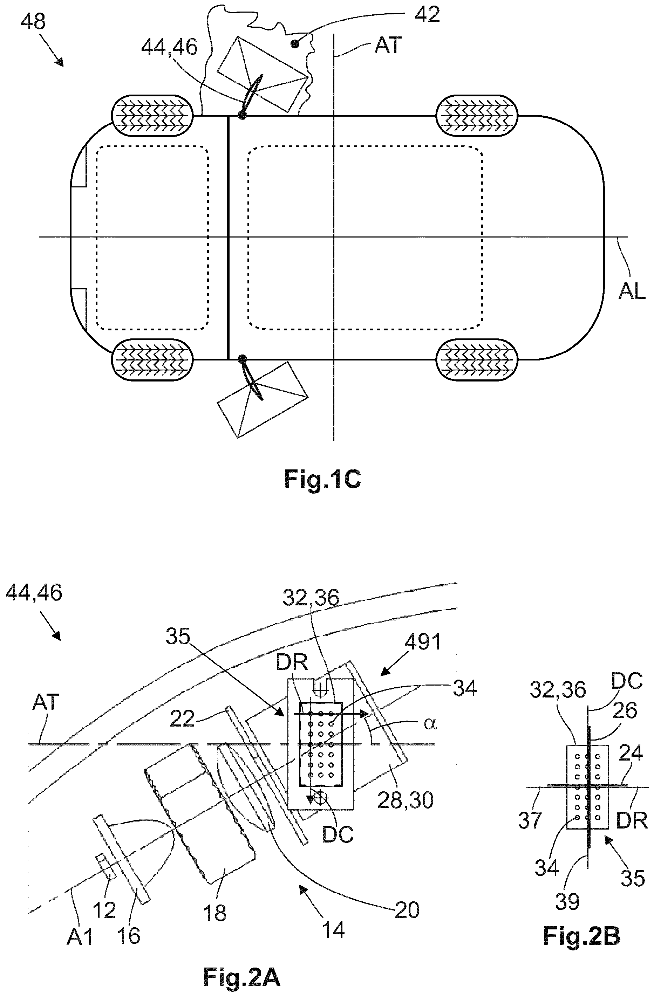

Figure 1A shows a projection unit 10 for generating an image known from the prior art. The projection unit 10 comprises a light source 12 for emitting light, the light source 12 in particular being embodied as an LED and/or a laser source. The number of light sources 12 can be freely chosen. In particular, light sources 12 emitting light of different color may be employed. Further, the projection unit 10 is equipped with a first lens unit 14 which in the shown embodiment comprises a condenser lens 16, a lens array 18, in particular a micro lens array 18 (MLA) or a cylindrical lens array 18 (CLA). The first lens unit 14 is further equipped with a Fourier lens 20 which alternatively may be embodied as a relay lens. The first lens unit 14 may be provided with additional optical elements that are not shown. Moreover, the first lens unit 14 comprises a pre-polarizer 22 which polarizes the light such that its electromagnetic waves run inside a first polarizing plain 24 and inside a second polarizing plain 26, the first polarizing plain 24 running perpendicular to the second polarizing plain 26 (see also Figure 2B). The light running in the first polarizing plain 24 is also referred to as P-polarized light and light running in the second polarizing plain 26 is referred to as S-polarized light. Seen from the light source 12, the pre-polarizer 22 is the last element of the first lens unit 14.

The first lens unit 14 collects and collimates the light ray emitted by the light source 12 such that they run parallel to or along a first axis A1.

The projection unit 10 is further provided with a reflector 28 which redirects the light leaving the first lens unit 14 along or parallel to a second axis A2. In Figure 1 the second axis A2 runs perpendicular to the first axis A1. The reflector 28 is embodied as a polarizing beam splitter 30 (PBS) which reflects P-polarized light and transmits S-polarized light or vice versa.

With reference to Figure 1A, a reflective microdisplay 32 is arranged above the polarized beam splitter 30. The reflective microdisplay 32 comprises a plurality of micro-reflecting elements 34 arranged in a matrix. The matrix is defined by a plurality of rows 37 and a plurality of columns 39. The rows 37 are running along a row direction DR and the columns 39 are running along a column direction DC. The row direction DR is perpendicular to the column direction DC and parallel to the first axis A1 (see Figure 1B).

The reflective microdisplay 32 is embodied as a liquid-crystal-on-silicon-element 36, also referred to as LCoS 36.

Assuming that the polarized beam splitter 30 reflects P-polarized light and transmits S-polarized light, only P-polarized light will be directed to the LCoS 36. Each individual micro-reflecting element 34 can be switched between a first state and a second state. In the first state, P-polarized light is reflected. In the second state, P-polarized light is converted into S-polarized light. P-polarized light reflected by the LCoS 36 will also be reflected by the polarizing beam splitter 30 in a direction parallel to the first axis A1 and thus towards the first lens unit 14 and the light source 12. Light converted to S-polarized light however, can pass through the polarizing beam splitter 30 and thus enters a second lens unit 38 which comprises in total three lenses 40, however, a different number of lenses 40 may be employed. Other optical elements (not shown) may also be provided in the second lens unit 38.

As a result, an image is formed consisting of bright and dark pixels wherein each pixel is defined by one of the micro-reflecting elements 34. The monochromatic image leaving the second lens unit 38 is projected on a projection surface 42 of or next to a vehicle 48 (see Figure 1C).

As initially mentioned, more than one light source 12 can be used. In particular, light sources 12 emitting light of different colors can be used. More or less in the same way as previously described, a polychromatic image can be generated.

Figure 1B shows a top view of the projection unit 10 shown in Figure 1A integrated into a vehicle part 44 of a vehicle 48, in this case into a side mirror 46, the casing of which is partially shown in Figure 1B. Figure 1C shows a principle top view of a vehicle 48 comprising such a projection unit 10.

Due to limited available space inside the side mirror 46, the projection unit 10 can only be integrated inclined to a longitudinal vehicle axis AL and/or to a transversal vehicle axis AT. The image generated by the projection unit 10 and projected to the projection surface 42, in this case the ground below the side mirror 46, is thus distorted and rotated with respect to the longitudinal vehicle axis AL and/or to the transversal vehicle axis AT which is considered as unfavorable (see Figure 1C).

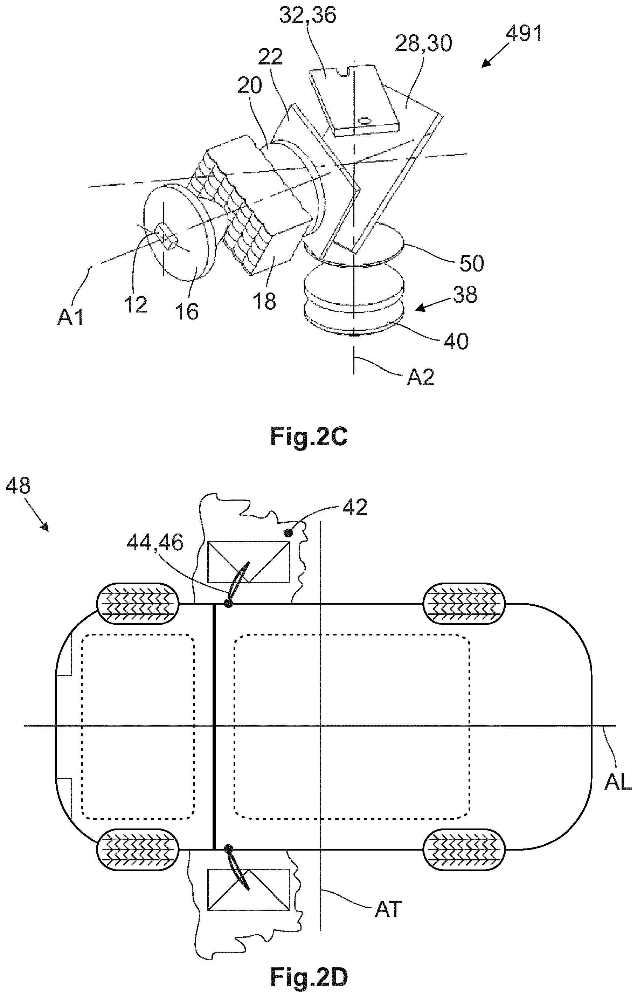

Figures 2A and 2C show a first embodiment of the projection unit 491 according to the present disclosure. The general design is the same as described with reference to Figures 1A and 1B so only the differences will be discussed in the following.

The projection unit 491 according to the first embodiment is equipped with a post-polarizer 50 which is part of the second lens unit 38 (Figure 2C). Following the travelling path of the light from the light source 12 to the projection surface 42, the post-polarizer 50 is located behind the polarizing beam splitter 30 and before the lenses of the second lens unit 38.

In the projection unit 491 according to the first embodiment of the present disclosure the reflective microdisplay 32, in this case the LCoS 36, is arranged rotated by a rotation angle α such that the column direction DC and the row direction DR are inclined with respect to the first axis A1. The rotation angle α is embedded into a horizontal plain. In the first embodiment shown in Figures 2A and 2C the rotation angle α is chosen such that the row column direction DC runs parallel to the longitudinal vehicle axis AL.

As evident from Figure 2C, not only the LCoS 36, but also the reflector 28, the light source 12 and the first lens unit 14 are rotated around the first axis A1. The reflector 28 may be rotated by a different angle (not explicitly shown) than the light source 12 and the first lens unit 14.

The angle or angles by which the reflector 28, the light source 12 and the first lens unit 14 are rotated is chosen such that the light is reflected by the reflector 28 in a way that it completely impinges the LCoS 36. Moreover, the angle or angles are chosen such that an even light distribution of the light impinging on the LCoS 36 is reached.

Referring to Figure 2B and as mentioned previously, the pre-polarizer 22 polarizes the light such that its waves run inside the first polarizing plain 24 and the second polarizing plain 26. In Figure 2B the first polarizing plain 24 and the second polarizing plain 26 are shown. Figure 2B also shows the reflective microdisplay 32. As can be seen, the first polarizing plain 24 is running parallel to the row direction DR.

As shown in Figure 2D, the image generated by the projection unit 491 according to the present disclosure and projected on the surface 42 is aligned with the longitudinal vehicle axis AL (cf. Figure 1C), has a sharp contrast and an even light distribution. Thus, the image projected on the projection surface 42 is not only aligned in the desired way but also of high quality.

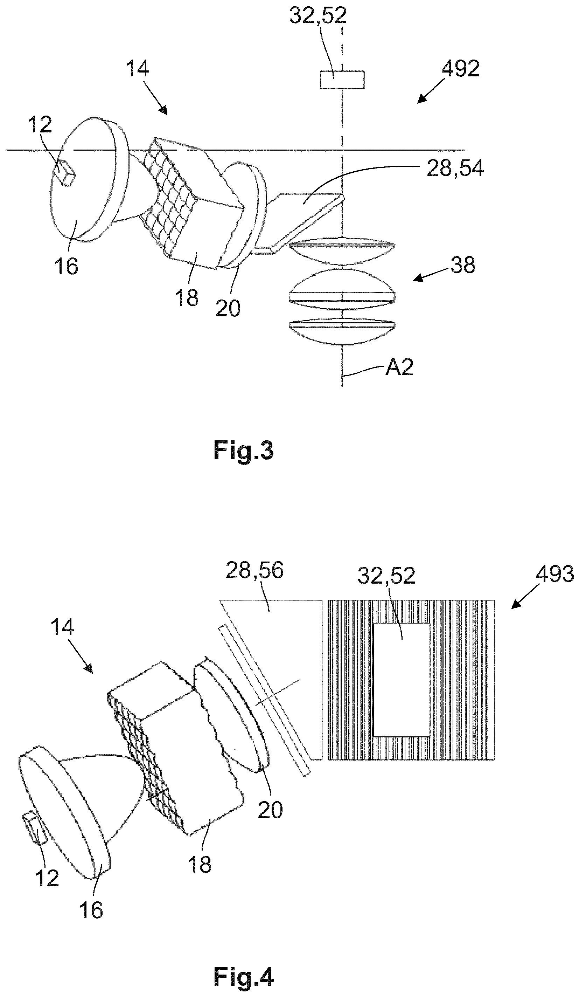

In Figure 3 a second embodiment of the projection unit 492 according to the present disclosure is shown by means of an isometric view. In this case the reflective microdisplay 32 is embodied as a digital micromirror device 52 (DMD). The reflector 28 is formed by a conventional mirror 54 which is arranged such that the light directed to the digital micromirror device 52 and reflected therefrom is not impinging on the reflector 28. In the second embodiment the projection unit 492 does not comprise a pre-polarizer 22 and the post-polarizer 50. Apart from that, the fundamental functionality is to a large extend comparable to the one described with respect to the LCoS 36.

In Figure 4 a third embodiment of the projection unit 493 according to the present disclosure is shown by means of a perspective view. The design of the projection unit 493 according the third embodiment is to a large extent the same as the design of the projection unit 492 according to the second embodiment. However, the reflector 28 is formed by a prism 56 instead of a conventional mirror 54.

### REFERENCE LIST

- 10: projection unit according to the prior art
- 12: light source
- 14: first lens unit
- 16: condenser lens
- 18: lens array

- 20: Fourier lens
- 22: pre-polarizer
- 24: first polarizing plain
- 26: second polarizing plain
- 28: reflector

- 30: polarizing beam splitter
- 32: reflective microdisplay
- 34: micro-reflecting element
- 35: matrix
- 36: liquid-crystal-on-silicon-element
- 37: row
- 38: second lens unit
- 39: column

- 40: lenses
- 42: projection surface
- 44: vehicle part
- 46: side mirror
- 48: vehicle
- 491 - 493: projection unit

- 50: post-polarizer
- 52: digital micromirror device
- 54: mirror
- 56: prism

- A1: first axis
- A2: second axis
- AL: longitudinal axis
- AT: transversal axis
- DC: column direction
- DR: row direction

- α: rotation angle

## Claims

1. Projection unit (491, 492, 493) of or for a vehicle (48), comprising
- a light source (12),
- a reflective microdisplay (32) for reflecting the light emitted by the light source (12), comprising
∘ micro-reflecting elements (34) arranged in a matrix (35),
∘ the matrix (35) being defined by at least two rows (37) running along a row direction (DR) and at least two columns (39) running along a column direction (DC),
∘ the row direction (DR) and the column direction (DC) running perpendicular to each other,
- a first lens unit (14) for collecting the light emitted by the light source (12) along a first axis (A1),
- a reflector (28) for directing the light collected by the first lens unit (14) to the reflective microdisplay (32) along a second axis (A2),
- a second lens unit (38) for collecting the light reflected by the reflective microdisplay (32) and for directing the collected light to a projection surface (42), **characterized in that**:
- the reflective microdisplay (32) is arranged inside the projection unit (491, 492, 493) rotated by a rotation angle (α) such that the row direction (DR) and/or the column direction (DC) are inclined to the first axis (A1).

2. Projection unit (491, 492, 493) according to claim 1,
**characterized in that** the reflector (28) is arranged inside the projection unit (491, 492, 493) rotated such that the light reflected by the reflector (28) is completely impinging on the reflective microdisplay (32).

3. Projection unit (491, 492, 493) according to one of the claims 1 or 2,
**characterized in that** the light source (12) and/or the first lens unit (14) are arranged inside the projection unit (491, 492, 493) rotated such that the light impinging on the reflective microdisplay (32) has an even light distribution.

4. Projection unit (491, 492, 493) according to one of the preceding claims, **characterized in that** the reflective microdisplay (32) is embodied as a liquid-crystal-on-silicon-element (36).

5. Projection unit (491, 492, 493) according to claim 4,
**characterized in that** the first lens unit (14) comprises a pre-polarizer (22) and the reflector (28) is formed by a polarizing beam splitter (30).

6. Projection unit (491, 492, 493) according to claim 5,
**characterized in that**
- the pre-polarizer (22) polarizes the light into a first polarizing plain (24) and a second polarizing plain (26),
- the first polarizing plain (24) and the second polarizing plain (26) running perpendicular to each other,
- the pre-polarizer (22) being arranged inside the projection unit (491, 492, 493) rotated such that the first polarizing plain (24) is running parallel or perpendicular to the row direction (DR).

7. Projection unit (491, 492, 493) according to one of the claims 4 to 6, **characterized in that** the second lens unit (38) comprises a post-polarizer (50).

8. Projection unit (491, 492, 493) according to one of the claims 1 to 3, **characterized in that** the reflective microdisplay (32) is embodied as a digital micromirror device (52).

9. Projection unit (491, 492, 493) according to claim 8,
**characterized in that** the reflector (28) is formed by a prism (56).

10. Vehicle part (44), comprising a projection unit (491, 492, 493) according to one of the preceding claims.

11. Vehicle (48), comprising a vehicle part according to claim 10 and/or a projection unit (491, 492, 493) according to claims 1 to 9.

## Patentansprüche

1. Projektionseinheit (491, 492, 493) eines Fahrzeugs (48) oder für ein solches, umfassend:
- eine Lichtquelle (12),
- ein reflektierendes Mikrodisplay (32) zum Reflektieren des von der Lichtquelle (12) emittierten Lichts, umfassend:
∘ reflektierende Mikroelemente (34), angeordnet in einer Matrix (35),
∘ wobei die Matrix (35) durch mindestens zwei entlang einer Reihenrichtung (DR) verlaufende Reihen (37) und mindestens zwei entlang einer Spaltenrichtung (DC) verlaufende Spalten (39) definiert ist,
∘ wobei die Reihenrichtung (DR) und die Spaltenrichtung (DC) senkrecht zueinander verlaufen,
- eine erste Linseneinheit (14) zum Sammeln des von der Lichtquelle (12) entlang einer ersten Achse (A1) emittierten Lichts,
- einen Reflektor (28) zum Leiten des von der ersten Linseneinheit (14) gesammelten Lichts entlang einer zweiten Achse (A2) zu dem reflektierenden Mikrodisplay (32),
- eine zweite Linseneinheit (38) zum Sammeln des vom reflektierenden Mikrodisplay (32) reflektierten Lichts und zum Leiten des gesammelten Lichts zu einer Projektionsfläche (42), **dadurch gekennzeichnet, dass**:
- das reflektierende Mikrodisplay (32) in der Projektionseinheit (491, 492, 493) um einen Schwenkwinkel (a) gedreht angeordnet ist, sodass die Reihenrichtung (DR) und/oder die Spaltenrichtung (DC) zur ersten Achse (A1) geneigt sind.

2. Projektionseinheit (491, 492, 493) nach Anspruch 1,
**dadurch gekennzeichnet, dass** der Reflektor (28) in der Projektionseinheit (491, 492, 493) derart gedreht angeordnet ist, dass das durch den Reflektor (28) reflektierte Licht vollständig auf das reflektierende Mikrodisplay (32) auftrifft.

3. Projektionseinheit (491, 492, 493) nach einem der Ansprüche 1 oder 2, **dadurch gekennzeichnet, dass** die Lichtquelle (12) und/oder die erste Linseneinheit (14) in der Projektionseinheit (491, 492, 493) derart gedreht angeordnet sind, dass Licht, welches auf das reflektierende Mikrodisplay (32) auftrifft, eine gleichmäßige Lichtverteilung aufweist.

4. Projektionseinheit (491, 492, 493) nach einem der vorhergehenden Ansprüche, **dadurch gekennzeichnet, dass** das reflektierende Mikrodisplay (32) als ein Flüssigkristall-auf-Silizium-Element (36) verkörpert ist.

5. Projektionseinheit (491, 492, 493) nach Anspruch 4,
**dadurch gekennzeichnet, dass** die erste Linseneinheit (14) einen Vorpolarisierer (22) umfasst und der Reflektor (28) durch einen polarisierenden Strahlteiler (30) gebildet ist.

6. Projektionseinheit (491, 492, 493) nach Anspruch 5,
**dadurch gekennzeichnet, dass**
- der Vorpolarisierer (22) das Licht in eine erste Polarisationsebene (24) und eine zweite Polarisationsebene (26) polarisiert,
- wobei die erste Polarisationsebene (24) und die zweite Polarisationsebene (26) senkrecht zueinander verlaufen,
- wobei der Vorpolarisierer (22) derart gedreht in der Projektionseinheit (491, 492, 493) angeordnet ist, dass die erste Polarisationsebene (24) parallel oder senkrecht zur Reihenrichtung (DR) verläuft.

7. Projektionseinheit (491, 492, 493) nach einem der Ansprüche 4 bis 6,
**dadurch gekennzeichnet, dass** die zweite Linseneinheit (38) einen Nachpolarisierer (50) umfasst.

8. Projektionseinheit (491, 492, 493) nach einem der Ansprüche 1 bis 3,
**dadurch gekennzeichnet, dass** das reflektierende Mikrodisplay (32) als eine digitale Mikrospiegelvorrichtung (52) verkörpert ist.

9. Projektionseinheit (491, 492, 493) nach Anspruch 8,
**dadurch gekennzeichnet, dass** der Reflektor (28) durch ein Prisma (56) gebildet ist.

10. Fahrzeugteil (44), umfassend eine Projektionseinheit (491, 492, 493) nach einem der vorhergehenden Ansprüche.

11. Fahrzeug (48), umfassend ein Fahrzeugteil nach Anspruch 10 und/oder eine Projektionseinheit (491, 492, 493) nach den Ansprüchen 1 bis 9.

## Revendications

1. Unité de projection (491, 492, 493) de ou pour un véhicule (48) ou pour un véhicule (48) comprenant
- une source de lumière (12),
- un micro-écran réfléchissant (32) pour réfléchir la lumière émise par la source de lumière (12) comprenant
∘ des éléments micro-réfléchissants (34) disposés dans une matrice (35),
∘ la matrice (35) étant définie par au moins deux lignes (37) s'étendant dans le sens des lignes (DR) et au moins deux colonnes (39) s'étendant dans le sens des colonnes (DC),
∘ le sens des lignes (DR) et le sens des colonnes (DC) étant perpendiculaires l'un à l'autre,
- une première unité de lentille (14) pour collecter la lumière émise par la source de lumière (12) le long d'un premier axe (A1),
- un réflecteur (28) pour diriger la lumière collectée par la première unité de lentille (14) vers le micro-écran réfléchissant (32) le long d'un deuxième axe (A2),
- une deuxième unité de lentille (38) pour collecter la lumière réfléchie par le micro-écran réfléchissant (32) et pour diriger la lumière collectée vers une surface de projection (42) **caractérisée en ce que** :
- le micro-écran réfléchissant (32) est disposé à l'intérieur de l'unité de projection (491, 492, 493) pivotée d'un angle de rotation (a) de telle sorte que le sens des lignes (DR) et/ou le sens des colonnes (DC) soient inclinés par rapport au premier axe (A1).

2. Unité de projection (491, 492, 493) selon la revendication 1,
**caractérisée en ce que** le réflecteur (28) est disposé à l'intérieur de l'unité de projection (491, 492, 493) pivotée de manière à ce que la lumière réfléchie par le réflecteur (28) soit entièrement incidente sur le micro-écran réfléchissant (32).

3. Unité de projection (491, 492, 493) selon l'une des revendications 1 ou 2, **caractérisée en ce que** la source de lumière (12) et/ou la première unité de lentille (14) sont disposées à l'intérieur de l'unité de projection (491, 492, 493) de manière à ce que la lumière incidente sur le micro-écran réfléchissant (32) présente une distribution de la lumière uniforme.

4. Unité de projection (491, 492, 493) selon l'une des revendications précédentes, **caractérisée en ce que** le micro-écran réfléchissant (32) est réalisé comme élément à cristaux liquides sur silicium (36).

5. Unité de projection (491, 492, 493) selon la revendication 4,
**caractérisée en ce que** la première unité de lentille (14) comprend un pré-polariseur (22) et **en ce que** le réflecteur (28) est formé par un séparateur de faisceau polarisant (30).

6. Unité de projection (491, 492, 493) selon la revendication 5,
**caractérisée en ce que**
- le pré-polariseur (22) polarise la lumière dans un premier plan de polarisation (24) et un second plan de polarisation (26),
- le premier plan de polarisation (24) et le deuxième plan de polarisation (26) sont perpendiculaires l'un à l'autre,
- le pré-polariseur (22) est disposé à l'intérieur de l'unité de projection (491, 492, 493) de manière à ce que le premier plan de polarisation (24) soit parallèle ou perpendiculaire au sens des lignes (DR).

7. Unité de projection (491, 492, 493) selon l'une des revendications 4 à 6, **caractérisée en ce que** la deuxième unité de lentille (38) comprend un post-polariseur (50).

8. Unité de projection (491, 492, 493) selon l'une des revendications 1 à 3, **caractérisée en ce que** le micro-écran réfléchissant (32) est réalisé comme dispositif à micro-miroir numérique (52).

9. Unité de projection (491, 492, 493) selon la revendication 8,
caractérisé en que le réflecteur (28) est constitué d'un prisme (56).

10. Pièce de véhicule (44) comprenant une unité de projection (491, 492, 493) selon l'une des revendications précédentes.

11. Véhicule (48) comprenant une pièce de véhicule selon la revendication 10 et/ou une unité de projection (491, 492, 493) selon les revendications 1 à 9.
